# EUROPEAN PATENT APPLICATION

(11) **EP 4 053 703 A1**
(43) Date of publication of application: **07.09.2022**
(21) Application number: 22155397.7
(22) Date of filing: 07.02.2022
(51) Int. Cl.: G06F 11/14, G06F 16/00

(54) **METHOD OR APPARATUS TO RECONSTRUCT LOST DATA AND METADATA**

(30) Priority: 05.03.2021 US 202117193372
(71) Applicant: EMC IP Holding Company LLC, Hopkinton, MA 01748 (US)
(72) Inventor: Thakkar, Smriti, San José, 95134 (US); Chinthekindi, Ramprasad, San José, 95129 (US); Balakrishnan, Kalidas, San José, 95136 (US); Gunda, Kalyan, 560103 Bangalore (IN)
(74) Representative: Graf von Stosch Patentanwaltsgesellschaft mbH

(57) **Abstract**

Data protection systems generate backups that may be stored in a namespace that includes an active tier and a cloud tier. Lost data in either tier can be reconstructed from the available tiers. Metadata can also be reconstructed from the data stored in the available tiers.

## Description

### FIELD OF THE INVENTION

Embodiments of the present invention generally relate to data protection including data recovery. More particularly, at least some embodiments of the invention relate to systems, hardware, software, computer-readable media, and methods for data protection operations including data reconstruction operations and/or metadata reconstruction operations.

### BACKGROUND

Generally, data protection systems protect data by generating backups and by recovering data from backups when necessary. In the event that production data is lost for any reason, the lost data can be restored from one of the backups. There are many scenarios, however, where it is not possible to recover data. For example, if the primary copy of data is lost and the backup copy of the data is also lost or unavailable, recovering the data may not be possible.

### BRIEF DESCRIPTION OF THE DRAWINGS

In order to describe the manner in which at least some of the advantages and features of the invention may be obtained, a more particular description of embodiments of the invention will be rendered by reference to specific embodiments thereof which are illustrated in the appended drawings. Understanding that these drawings depict only typical embodiments of the invention and are not therefore to be considered to be limiting of its scope, embodiments of the invention will be described and explained with additional specificity and detail through the use of the accompanying drawings, in which:
Figure 1 discloses aspects of a data protection system configured to reconstruct data and/or metadata;
Figure 2 discloses aspects of how data is processed and deduplicated in a data protection system;
Figure 3 discloses aspects of how files may be stored in a data protection system;
Figure 4 discloses aspects of a namespace that includes an active tier and a cloud tier and how data may be stored in the namespace;
Figure 5 discloses aspects of a scaled architecture configured to reconstruct data and/or metadata;
Figure 6 discloses aspects of a method for reconstructing lost data in the cloud tier;
Figure 7 discloses aspects of a method for reconstructing lost data in an active tier;
Figure 8 discloses aspects of a method for reconstructing data in a scaled architecture;
Figure 9 discloses aspects of a method for reconstructing metadata in a namespace; and
Figure 10 discloses aspects of a computing system.

### DETAILED DESCRIPTION OF SOME EXAMPLE EMBODIMENTS

Embodiments of the present invention generally relate to data protection and data protection operations. More particularly, at least some embodiments of the invention relate to systems, hardware, software, computer-readable media, and methods for data protection operations including, but not limited to, data reconstruction or recovery operations, metadata reconstruction or recovery operations, multi-tier-based reconstruction (metadata and/or data) operations, or the like.

Embodiments of the invention relate to data protection operations that provide data protection and data integrity capabilities in systems that provide multi-tier storage. For example, a data protection system may store data in a namespace that includes an active tier and a cloud tier. Data stored in the active tier may be moved to the cloud tier and vice versa. In some examples, the data protection system may store data in a meta-separated manner. In this case, the metadata may be stored locally to avoid cloud reads during some operations such as data ingestion and garbage collection.

When data is backed up to the active tier from a production system, the data being backed up (e.g., files) may be divided into chunks or segments for various reasons such as deduplication. Some of this data may be moved to the cloud tier immediately or over time or based on factors such as data age.

As operations are performed in the active tier and the cloud tier (deduplication, garbage collection, rebalancing, etc.) and for other reasons (software bugs, user error, etc.), data can become lost in the cloud tier and/or the active tier. Lost or missing data or objects refers to data that cannot be located or accessed for a variety of different reasons.

In the event that some of the segments are missing from the cloud tier, embodiments of the invention may be able to recover the missing segments the active tier. Embodiments similarly provide, when possible, the ability to recover segments missing in the active tier from the cloud tier. Embodiments further provide the ability to reconstruct metadata that may be lost or missing. Embodiments of the invention help lower the likelihood of permanent data loss and relate to reconstruction operations that allow lost data and/or metadata to be reconstructed from the existing storage tiers.

In one example, a data protection system may protect the data of a primary or production system by generating backups of the production data. The data protection system may be associated with various tiers, such as the active tier and cloud tier previously mentioned. For example, the storage of a data protection system (e.g., a backup appliance or device or group of appliances) may be referred to as an active tier. The data protection system may also have or be associated with a cloud tier, which includes storage in the cloud (e.g., at one or more datacenters). A similar appliance may be operating in the cloud tier.

Embodiments of the invention are configured to reconstruct lost data or lost metadata on the cloud tier using the active tier and to reconstruct lost data on the active tier from the cloud tier. Embodiments of the invention are also configured to reconstruct lost data in a federated or cluster arrangement. In addition to reconstructing lost data, embodiments of the invention are configured to recover or reconstruct lost metadata in the active tier and/or the cloud tier.

Embodiments of the invention can be applied to various data protection systems in addition to those discussed herein.

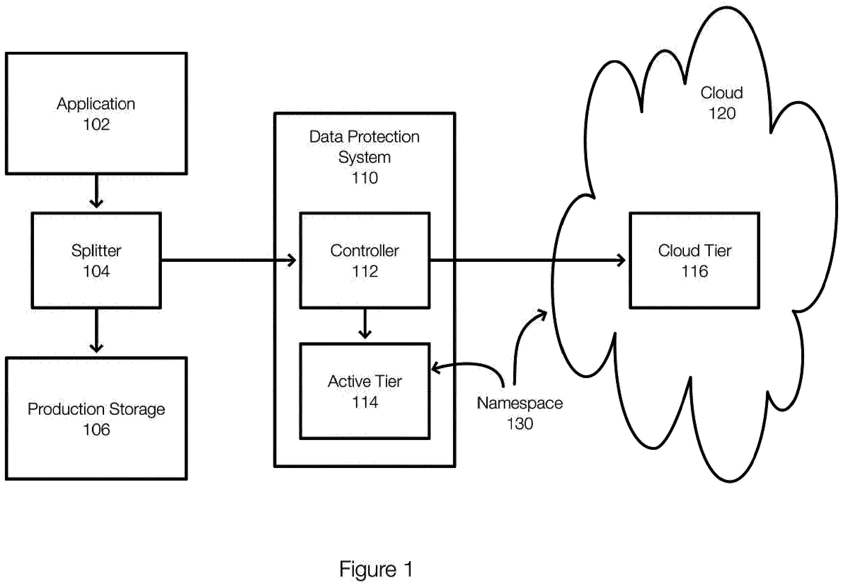

Figure 1 illustrates an example of a computing environment in which a data protection system is operating. Figure 1 illustrates a data protection system 110 that is configured to perform data protection operations including reconstruction operations. The data protection system 110 may include a controller 112 (e.g., a processor configured to execute instructions to perform the data protection operations) and other computer hardware such as network cards, memory, or the like.

The data protection system 110 is configured to protect the data of a production system, which may include an application 102. Generally, the application 102 performs writes (IOs) to a production storage 106. A splitter 104 intercepts the writes and sends a copy of the writes to the data protection system 110. In this manner, the write from the application 102 is delivered to both the production storage 106 and the data protection system 110. This allows the data protection system 110 to generate backups of the data stored in the production storage 106. The backups may include full backups, incremental backups, any point in time backups, or the like.

In Figure 1, the data protection system 110 is associated with a namespace 130, which includes the active tier 114 and a cloud tier 116 in the cloud 120. In other words, the active tier 114 and the cloud tier 116 are configured to be in the same namespace 130. Data can be moved from the active tier to the cloud tier and from the cloud tier to the active tier. The active tier 114 and the cloud tier include storage devices for storing data. The type of storage (e.g., object storage, block storage) can vary and may depend on the data protection system.

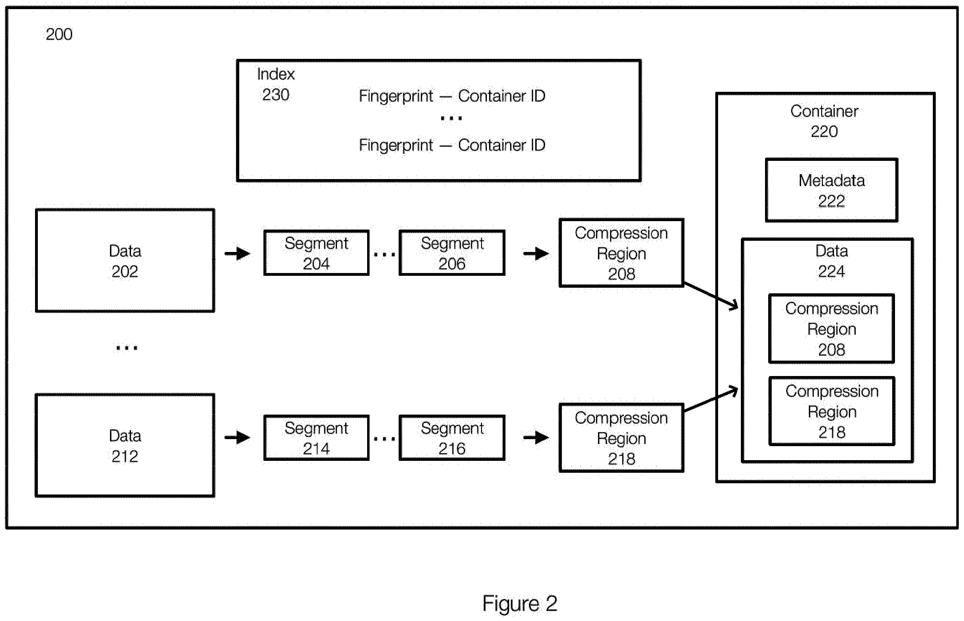

Figure 2 illustrates an example of a data protection system configured to perform data protection operations including data and/or metadata reconstruction operations. Figure 2 illustrates an example of ingesting data into the data protection system 200.

More specifically, Figure 2 illustrates an appliance 200 (e.g., physical, virtual), which is an example of a data protection system, that performs various data protection operations with regard to data. In Figure 2, the appliance 200 may receive data, such as the data 202 and 212, from a splitter. The appliance 200 breaks the data 202 into chunks represented by segments 204 and 206. Similarly, the data 212 is chunked into pieces, represented by segments 214 and 216. The data can then be deduplicated in a segment-based manner. The segments may be of fixed size or variable size.

After generating the segments from the incoming data 202 and 212, a group of segments may be stored in a compression region. More specifically, the segments 204 and 206 (and/or other segments) may be stored in the compression region 208. The segments 214 and 216 (and/or other segments) are similarly stored in the compression region 218. The compression regions 208 and 218 are then stored together as data 224 in a container 220. Thus, the data 224 may include a plurality of compression regions. In one example, the container 220 constitutes a single object. In another example, each of the compression regions 208 and 218. may constitute an object. Other arrangements are also possible.

The appliance 200 calculates or determines a fingerprint for each of the segments 204, 206, 214, and 216. A fingerprint may be a unique representation of a segment and may be a hash (e.g., SHA1 hash) of a segment. In other words, each segment is hashed to obtain the segment's fingerprint.

The container 220 may have a metadata section, represented by the metadata 222 and a data section, represented by the data 224. The metadata 222 stores metadata of the container 220. The metadata 222 may include, by way of example only, the total number of compression regions in the data 224, the total number of segments in the container 220 and/or in each compression region, a fingerprint of each segment included in the data 224, encryption and compression information for each of the compression regions 224, and the like or combination thereof.

The appliance 200 may maintain an index 230 that maps fingerprints to containers (e.g., container identifier (ID)). Thus, the container 220 has an ID and the fingerprints of the segments stored in the container 220 are associated with that container ID in the index 230. The index 230 thus ensures that, if the fingerprint of a segment is known, the container storing the segment corresponding to that fingerprint can be identified. The index 230 may be general to the entire namespace. Alternatively, the index 230 may include an active tier index and a cloud tier index.

Because files are stored as segments, files can be retrieved when necessary by essentially retrieving all of the segments that belong to a file. This is achieved by associating a file with its corresponding segments. By way of example only, each file stored in or by the appliance 200 on in the namespace may be represented as a Merkle tree. The Merkle tree, which corresponds to a file, identifies the fingerprints for all segments belonging to that file. The index 230 allows the containers of the actual segments to be identified and allows the segments to be retrieved from the identified containers in which they are stored. Once the segments are retrieved, the file can be reconstituted from the segments.

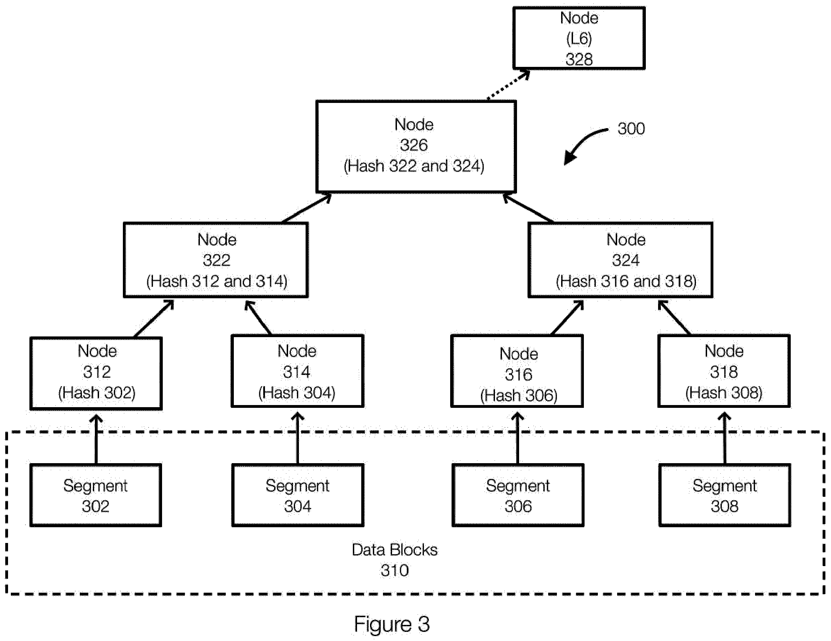

Figure 3 illustrates an example of a file stored in or by an appliance and the file's corresponding Merkle tree. Figure 3 illustrates the Merkle tree of a file 300. In one example, a Merkle tree includes several layers. The bottom layer, often referred to as the L0 layer, includes the data blocks 310. The data blocks 310 are the segments of the file 300 and include in this example, segments 302, 304, 306, and 308.

A Merkle tree, in one example, may also include Lp layers (e.g., L1, L2, L3, L4, L5, and L6). Generally the top layer of the Merkle tree is the L6 layer. Thus, the node 326 is an L6 layer node in this example (not all layers of the Merkle tree are illustrated in Figure 3). The nodes 312, 314, 316, and 318 are L1 nodes, the nodes 322 and 324 and L2 nodes, and the node 326 is an L3 node.

More specifically, the data blocks 310 are in the L0 layer. The L1 layer includes a hash of the corresponding data segment. Thus, the node 312 of the Merkle tree includes a hash of the segment 302. Similarly, the nodes 314, 316, and 318 include, respectfully, hashes of the segments 304, 306, and 308.

The Lp layers combine the hashes of the hashes stored in the immediately lower layer into a single hash. Thus, the node 322 includes a hash of node 312 and node 314. The node 324 includes a hash of node 316 and node 318. The node 326 includes a hash of the node 322 and the node 324.

This process continues up to the L6 node 328, which is the top of the file 300 represented by the Merkle tree in Figure 3. The node 328 thus represents the entire file 300 and the node 328 is typically stored in the namespace 130, which may be represented by a tree such as a B+ tree. The segments associated with the file 300 can be identified starting with the node 328, which stores a hash of the L5 nodes.

In one example, the L0 segments and the Lp segments are typically written to different or separate containers, referred to as L0 containers and Lp containers. The active tier 114 of the data protection system 110 may process and store files as illustrated in Figures 2-3.

As further illustrated in Figure 1, the namespace 130 may include the active tier 114 and the cloud tier 116. The addition of the cloud tier 116 allows a file to be moved from the active tier 114 to the cloud tier 116. When a file is moved from the active tier 114 to the cloud tier 116, the location information of the file referring to the cloud tier storage 116 (or the cloud object storage) is stored in the namespace 130 and may be stored in the active tier.

In one example, the active tier 402 may store metadata containers 404 (e.g., CMETA containers or meta containers) and data containers 406, examples of which include L0 containers. For convenience, L0 containers are referred to as data containers because they store the actual segments. Data containers 414 may be stored in the cloud tier 412. However, the data objects such as data containers, metadata containers, LP containers, or other objects including compression regions, may be stored in either tier.

In one example, a metadata container may store the metadata sections of multiple data and metadata containers. The metadata containers may include cloud metadata containers, Lp containers, and the like.

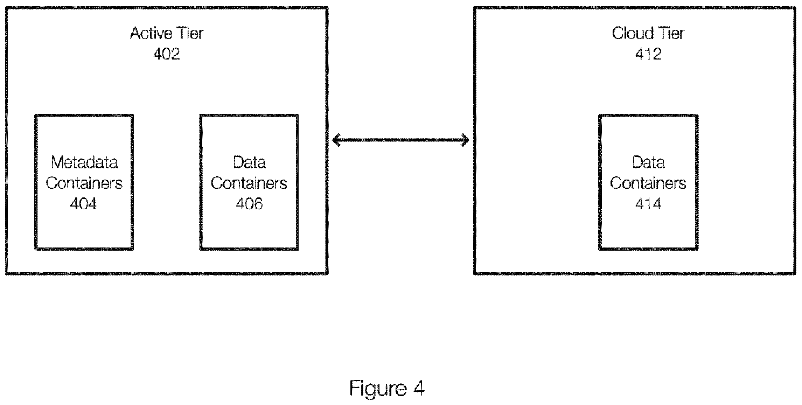

In one example, each compression region of a data container is stored as an individual object in the cloud tier. In another example, the entire data container is stored as an individual object in the cloud tier. This second example may reduce object count while increasing object size. The types of containers that may be stored in the active tier and the cloud tier is not limited by the examples shown in Figure 4.

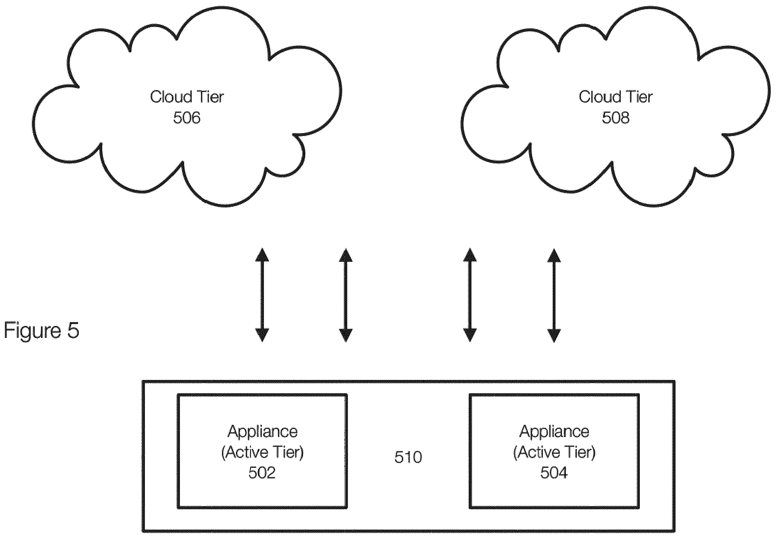

Figure 5 illustrates an example of a scalable data protection system. Figure 5 illustrates that the active tier may include multiple appliances, represented by the appliances (or nodes) 502 and 504. Each node 502 and 504 may have its own active tier and maintain its own set of metadata containers and/or data containers and/or indexes. Similarly, the active tier can be connected to multiple cloud tiers, represented by cloud tiers 506 and 508.

The cluster illustrated in Figure 5, represented by the nodes 502 and 504, is scalable. The cluster, for example, can include tightly coupled nodes or loosely coupled nodes. In one example, each node may be an active tier and may connect with one or more cloud tiers. In a tightly coupled architecture, the placement and arbitration across nodes is performed by a management node. In a loosely coupled architecture, the cluster may be a federation of nodes and the architecture provides a way to unify the management of multiple nodes and clients.

Generally, when a new node is added to the cluster 510, the capacity is balanced across all nodes. This may require files to be moved amongst the nodes. Files or clients may be moved amongst or rebalanced across the nodes in the cluster 510 in order to achieve better deduplication, provide better performance, or for other reasons.

The configuration of the containers allows data to be reconstructed from the available tiers. This reduces potential data loss and allows the data protection system to selfheal. By self-healing, lost data does not need to be acquired from the production system or from a source outside of the namespace. Because the various containers and indexes allow segments, fingerprints, and other information to be identified, data and/or metadata can be reconstructed. As discussed in more detail below, lost (e.g., missing, corrupted, deleted) data in the active tier can be reconstructed from the cloud tier and lost data in the cloud tier can be reconstructed from the active tier. In addition, lost metadata can also be reconstructed in certain situations. Thus, embodiments of the invention relate to reconstructing lost data from the available tiers.

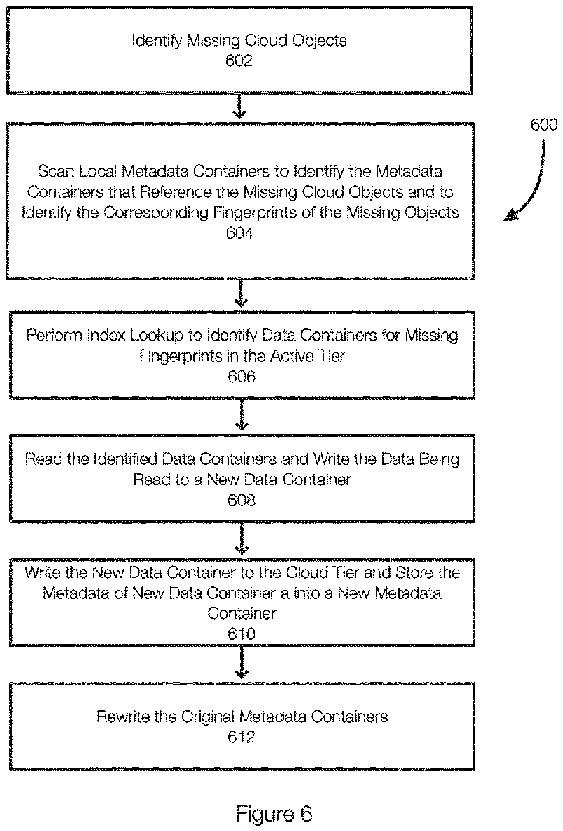

Figure 6 illustrates an example of reconstructing lost data on the cloud tier from the active tier. As previously mentioned, an object in the cloud tier, by way of example and not limitation, may be a single compression region of a data container or an entire data container, or other object. A metadata container (e.g., a cloud metadata container for objects stored in the cloud tier), which may be stored in the active tier, includes a reference to every cloud object and includes the fingerprint of each segment within a given cloud object. If an object is lost in the cloud tier, the metadata container ensures that all of the fingerprints belonging to the lost object are known.

In one example, the lost cloud object can be reconstructed by looking for the existence of segments corresponding to the fingerprints associated with the lost object in the active tier. If the segments are present in the active tier, new data containers can be prepared by reading the segments from the relevant active tier containers and storing those segments into a new data container. The new data container can be written to the cloud tier. A new metadata container may be generated for the new data container and the new metadata container may be stored locally in the active tier along with the object's fingerprint information. The original metadata containers having references to the lost cloud objects can be re-written by removing the references to the lost cloud objects.

In the method 600, missing cloud objects in the cloud tier are determined or identified 602. As previously stated and by way of example only, the objects may be a single compression region or a data container that may include multiple compression regions. Once the missing objects are identified in the cloud tier, the local metadata containers can be scanned 604 to identify the specific metadata containers that identify or reference the missing cloud objects. More specifically, the metadata containers contain references to every object in the cloud tier. Because the missing objects are identified, the metadata containers that reference those objects can also be identified. Once the metadata containers that identify the missing cloud objects are identified, the fingerprints of segments corresponding to the missing objects can be determined 604 because the fingerprints of the segments in the missing cloud objects are stored in the metadata container. More specifically, the missing objects are typically associated with multiple segments. The fingerprints of those segments are determined 604 for the missing objects from the metadata containers.

Next, the index (e.g., the index 230) can be accessed (index lookup) 606 to identify the data containers for the segments associated with the missing objects. More specifically, the index associates fingerprints to containers or container identifiers. Thus, an index lookup for each fingerprint identified from the metadata containers for the missing objects can be performed. This allows tuples for each fingerprint to be generated, such as <data container ID - compression region offset - region size>.

For each of these tuples, the relevant container compression regions are read 608 and the segments read from these containers are written to a new in-memory data container. The new data container, which is an example of an L0 container, can be written to the cloud tier. The metadata sections or information for the new data container is generated and stored into a new metadata container 610. The original metadata containers, from which the fingerprints of the missing segments were identified, are then rewritten 612 to remove the metadata sections for the missing cloud objects. This allows the metadata of the system to be in a consistent state. Thus, missing objects in the cloud tier can be reconstructed from the active tier when possible.

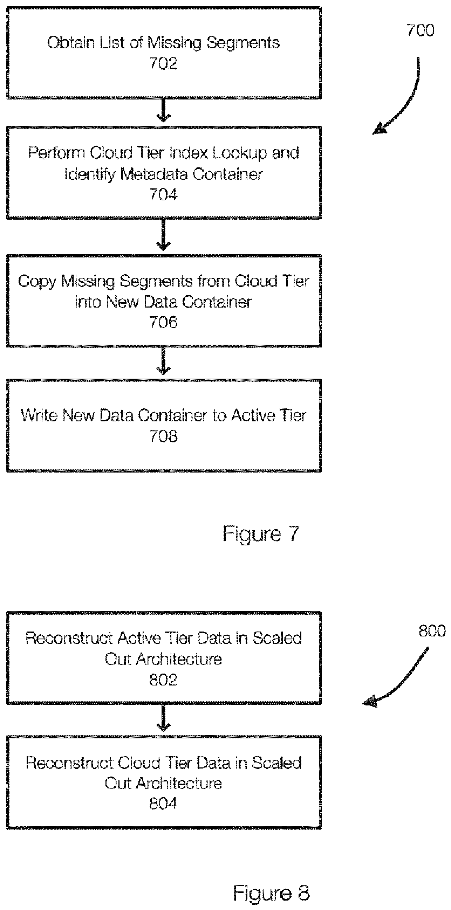

Figure 7 illustrates an example of a method for reconstructing lost data on the active tier using the cloud tier. When data is lost (e.g., lost segments) on the active tier, the fingerprints of the lost segments are typically known. The metadata containers (in particular the cloud metadata containers in one example) can be evaluated to determine if those segments are present in the cloud tier. If the segment is present in the cloud tier, the segment can be retrieved to the active tier to heal or recover the lost data in the active tier.

The method 700 may have access to or may determine a list of missing segments. This allows the corresponding fingerprints to be identified 702. A cloud tier index lookup 704 may be performed for each missing fingerprint to identify the metadata container ID and corresponding cloud data object. The missing segments are then copied 706 from the segments in the objects stored in the cloud into a new in memory data container. The new data container can be written 708 to the active tier to heal or recover the lost data. The indexes and/or other metadata containers are updated as needed.

Figure 8 illustrates an example of a method for reconstructing data in a scaled-out architecture. In a scaled-out architecture, nodes may be added/removed to the cluster. Generally, the need for capacity increases and nodes are added. When nodes are added, or for other reasons, rebalancing may occur across the nodes in the cluster. For example, files from one node may be moved to another node in order to balance the overall load across all nodes. This may be done to improve deduplication in the cluster, to improve performance, or the like. As a result, there may be situations where the same segment or segments are present on multiple nodes.

Figure 8 illustrates a method for reconstructing data in scaled out environment such as a cluster. When data loss is detected at a node, for example, the lost data is reconstructed 802 using the active tiers of other nodes. The missing segments can be identified and, using the method of Figure 7, the active tiers of the nodes in the cluster can be searched for copies of the missing segments. Using the method of Figure 6, the cloud tiers can also be searched for copies of the missing segments.

Similarly, if data is missing in the cloud tier, the cloud tier data or object can be reconstructed 804 by looking for the missing data in other cloud tiers using the method of Figure 6 or by looking for the missing data in the active tiers of the nodes using the method of Figure 7.

Embodiments of the invention further relate to reconstructing metadata. As discussed previously, an object in the cloud may be represented in different ways. A compression region may be an object or an entire container may be an object. The metadata containers (e.g., cloud metadata containers) stored in the active tier include a reference to every cloud object and fingerprint information for each segment within a given object. If a fingerprint is looked up in an index, the metadata container for that fingerprint is identified. Reading that metadata container, however, may fail for various reasons. If the data object is still available in the cloud, the metadata can be recovered and the metadata containers can be reconstructed.

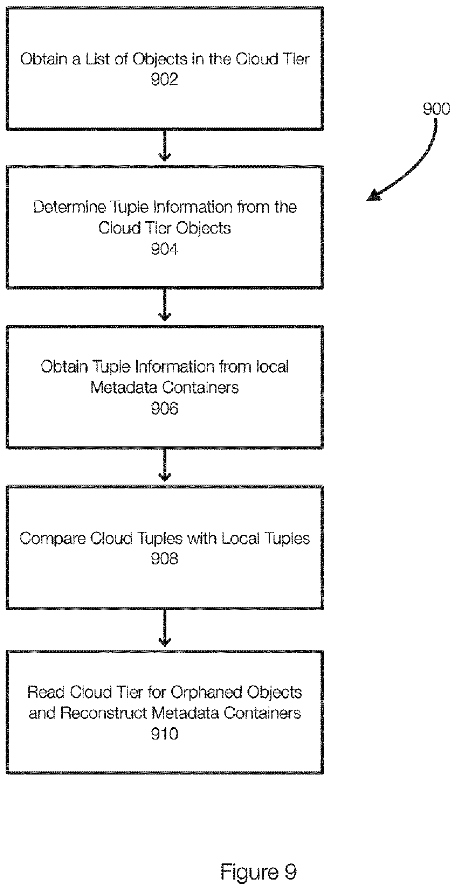

Figure 9 illustrates an example of a method for reconstructing metadata. In the method 900, a list of objects stored in the cloud tier 902 is obtained or determined. A cloud provider may provide commands that allows all objects to be identified. Tuple information may be determined 904 from the cloud objects. Each object, in one example, can be represented as <Data container ID, compression region offset, compression region size>. Metadata containers on the active tier can be scanned to identify the same tuple information or to obtain the active tier tuples.

Next, the tuples determined from the cloud objects are compared 908 with the active tier tuples. This allows orphaned objects in the cloud tier to be identified. In other words, the orphaned cloud tier objects are objects for which no metadata is present in the metadata containers on the active tier. For the orphaned objects, the cloud tier is read 910. Because each object contains or is associated with information about fingerprints, encryption, compression algorithms, and the like, new metadata containers for the orphaned cloud objects can be constructed in the active tier. This allows the metadata of orphaned cloud data objects to be reconstructed.

As previously stated, data can become lost for many reasons. For example, the cloud provider may accidentally delete an object. Software may have bugs that causes objects or segments to be deleted in the cloud tier and/or in the active tier. Embodiments of the invention are able to reconstruct data and metadata in many instances.

Movement of files from the active tier to the cloud tier may depend on migration policies. For example, file movement may be based on file age. After files are moved from the active tier to the cloud tier, garbage collection may be performed in the active tier to reclaim space. However, garbage collection may not clean all of the segments copied to the cloud tier at least because some files on the active tier may use those segments. Further, garbage collection may not clean every dead segment (e.g., a segment not referenced by any file) in order to reduce or minimize unnecessary data movement. As older backup files are moved to the cloud tier, the newer generations of backup files may have some overlap with the older generations due to the data change rate. As a result, it is likely that segments in the cloud tier may also be found in the active tier. Consequently, data that becomes lost in one of the tiers may be able to be reconstructed from the other tiers.

Also, the ingestion of files into the data protection system includes deduplicating the files against existing fingerprints in an index. The data protection system may perform an index lookup of the ingested data to determine whether the data is already present in the system. This incurs disk reads to bring the container metadata into the in memory fingerprint cache. To avoid too frequent on-disk index lookups, deduplication may not be perfect for performance reasons. Plus, data can be recovered from other copies.

In addition, there is a good likelihood of reconstructing the missing fingerprints across nodes in a scaled out architecture. Data is moved in a scaled-out architecture to rebalance capacity (e.g., moving data to optimize deduplication by moving similar data sets to the same node, or to improve performance by moving data to a lightly loaded node). In one example, space is reclaimed when performing garbage collection. As previously stated, not all segments are removed as previously stated. This improves the likelihood of finding a copy of a data segment on another node. The likelihood further improves with the availability of multiple active tiers, multiple cloud tiers, and because segments are often shared across many files.

The following is a discussion of aspects of example operating environments for various embodiments of the invention. This discussion is not intended to limit the scope of the invention, or the applicability of the embodiments, in any way.

In general, embodiments of the invention may be implemented in connection with systems, software, and components, that individually and/or collectively implement, and/or cause the implementation of, data protection operations. Such operations may include, but are not limited to, reconstruction operations (data and/or metadata), data read/write/delete operations, data deduplication operations, data backup operations, data restore operations, data cloning operations, data archiving operations, and disaster recovery operations. More generally, the scope of the invention embraces any operating environment in which the disclosed concepts may be useful.

At least some embodiments of the invention provide for the implementation of the disclosed functionality in existing backup platforms, examples of which include the Dell-EMC NetWorker and Avamar platforms and associated backup software, and storage environments such as the Dell-EMC DataDomain storage environment. In general however, the scope of the invention is not limited to any particular data backup platform or data storage environment.

New and/or modified data collected and/or generated in connection with some embodiments, may be stored in a data protection environment that may take the form of a public or private cloud storage environment, an on-premises storage environment, and hybrid storage environments that include public and private elements. Any of these example storage environments, may be partly, or completely, virtualized. The storage environment may comprise, or consist of, a datacenter which is operable to service read, write, delete, backup, restore, and/or cloning, operations initiated by one or more clients or other elements of the operating environment. Where a backup comprises groups of data with different respective characteristics, that data may be allocated, and stored, to different respective targets in the storage environment, where the targets each correspond to a data group having one or more particular characteristics.

Example cloud computing environments, which may or may not be public, include storage environments that may provide data protection functionality for one or more clients. Another example of a cloud computing environment is one in which processing, data protection, and other, services may be performed on behalf of one or more clients. Some example cloud computing environments in connection with which embodiments of the invention may be employed include, but are not limited to, Microsoft Azure, Amazon AWS, Dell EMC Cloud Storage Services, and Google Cloud. More generally however, the scope of the invention is not limited to employment of any particular type or implementation of cloud computing environment.

In addition to the cloud environment, the operating environment may also include one or more clients that are capable of collecting, modifying, and creating, data. As such, a particular client may employ, or otherwise be associated with, one or more instances of each of one or more applications that perform such operations with respect to data. Such clients may comprise physical machines, or virtual machines (VM)

Particularly, devices in the operating environment may take the form of software, physical machines, or VMs, or any combination of these, though no particular device implementation or configuration is required for any embodiment. Similarly, data protection system components such as databases, storage servers, storage volumes (LUNs), storage disks, replication services, backup servers, restore servers, backup clients, and restore clients, for example, may likewise take the form of software, physical machines or virtual machines (VM), though no particular component implementation is required for any embodiment. Where VMs are employed, a hypervisor or other virtual machine monitor (VMM) may be employed to create and control the VMs. The term VM embraces, but is not limited to, any virtualization, emulation, or other representation, of one or more computing system elements, such as computing system hardware. A VM may be based on one or more computer architectures, and provides the functionality of a physical computer. A VM implementation may comprise, or at least involve the use of, hardware and/or software. An image of a VM may take the form of a .VMX file and one or more .VMDK files (VM hard disks) for example.

As used herein, the term 'data' is intended to be broad in scope. Thus, that term embraces, by way of example and not limitation, data segments such as may be produced by data stream segmentation processes, data chunks, data blocks, atomic data, emails, objects of any type, files of any type including media files, word processing files, spreadsheet files, and database files, as well as contacts, directories, sub-directories, volumes, and any group of one or more of the foregoing.

Example embodiments of the invention are applicable to any system capable of storing and handling various types of objects, in analog, digital, or other form. Although terms such as document, file, segment, block, or object may be used by way of example, the principles of the disclosure are not limited to any particular form of representing and storing data or other information. Rather, such principles are equally applicable to any object capable of representing information.

As used herein, the term 'backup' is intended to be broad in scope. As such, example backups in connection with which embodiments of the invention may be employed include, but are not limited to, full backups, partial backups, clones, snapshots, and incremental or differential backups.

It is noted with respect to the example method of Figure(s) XX that any of the disclosed processes, operations, methods, and/or any portion of any of these, may be performed in response to, as a result of, and/or, based upon, the performance of any preceding process(es), methods, and/or, operations. Correspondingly, performance of one or more processes, for example, may be a predicate or trigger to subsequent performance of one or more additional processes, operations, and/or methods. Thus, for example, the various processes that may make up a method may be linked together or otherwise associated with each other by way of relations such as the examples just noted.

Following are some further example embodiments of the invention. These are presented only by way of example and are not intended to limit the scope of the invention in any way.

Embodiment 1. A method, comprising: identifying missing objects in a cloud tier of a data protection system, identifying metadata containers, stored in an active tier, that reference the missing objects, determining fingerprints associated with the missing objects from the identified metadata containers, reading data containers in the active tier based on the fingerprints of the missing objects, writing data read from the data containers into a new data container, and writing the new data container to the cloud tier.

Embodiment 2. The method of embodiment 1, further comprising performing an index lookup for each of the fingerprints to identify the data containers storing the missing objects.

Embodiment 3. The method of embodiment 1 and/or 2, wherein the cloud tier and the active tier are part of a namespace.

Embodiment 4. The method of embodiment 1, 2, and/or 3, wherein an object is an entire data container that includes a plurality of compression regions or a compression region, wherein each compression region includes a plurality of segments.

Embodiment 5. The method of embodiment 1, 2, 3, and/or 4, further comprising generating a new metadata container to store metadata for the new data container.

Embodiment 6. The method of embodiment 1, 2, 3, 4, and/or 5, further comprising storing the new metadata container in the active tier.

Embodiment 7. The method of embodiment 1, 2, 3, 4, 5, and/or 6, further comprising rewriting the identified metadata containers to remove the metadata stored in the new metadata container.

Embodiment 8. A method comprising: determining a list of missing objects in an active tier of a data protection system and fingerprints associated with the missing objects, performing a cloud tier index lookup to identify a metadata container that references the missing objects, copy segments corresponding to the missing objects from a cloud tier based on metadata stored in the metadata container, and writing the segments into a new data container.

Embodiment 9. The method of embodiment 8, further comprising storing the new data container in the active tier.

Embodiment 10. The method of embodiment 8 and/or 9, wherein the data protection system is a scaled-out data protection system, further comprising reconstructing active tier data from one or more cloud tiers and one or more active tiers.

Embodiment 11. The method of embodiment 8, 9, and/or 10, wherein the data protection system is a scaled-out data protection system, further comprising reconstructing cloud tier data from one or more cloud tiers and one or more active tiers.

Embodiment 12. A method for reconstructing metadata, the method comprising: obtaining a list of objects from a cloud tier, determining cloud tuple information from the cloud tier objects, determining active tuple information from metadata containers stored in the active tier, comparing the cloud tuples and the active tuples to identify orphaned objects in the cloud tier, and reconstructing metadata containers in the active tier from the orphaned objects.

Embodiment 13. A method for performing any of the operations, methods, or processes, or any portion of any of these, in embodiments 1-12 or disclosed herein.

Embodiment 14. A non-transitory storage medium having stored therein instructions that are executable by one or more hardware processors to perform operations comprising the operations of any one or more of embodiments 1-13.

The embodiments disclosed herein may include the use of a special purpose or general-purpose computer including various computer hardware or software modules, as discussed in greater detail below. A computer may include a processor and computer storage media carrying instructions that, when executed by the processor and/or caused to be executed by the processor, perform any one or more of the methods disclosed herein, or any part(s) of any method disclosed.

As indicated above, embodiments within the scope of the present invention also include computer storage media, which are physical media for carrying or having computer-executable instructions or data structures stored thereon. Such computer storage media may be any available physical media that may be accessed by a general purpose or special purpose computer.

By way of example, and not limitation, such computer storage media may comprise hardware storage such as solid state disk/device (SSD), RAM, ROM, EEPROM, CD-ROM, flash memory, phase-change memory ("PCM"), or other optical disk storage, magnetic disk storage or other magnetic storage devices, or any other hardware storage devices which may be used to store program code in the form of computer-executable instructions or data structures, which may be accessed and executed by a general-purpose or special-purpose computer system to implement the disclosed functionality of the invention. Combinations of the above should also be included within the scope of computer storage media. Such media are also examples of non-transitory storage media, and non-transitory storage media also embraces cloud-based storage systems and structures, although the scope of the invention is not limited to these examples of non-transitory storage media.

Computer-executable instructions comprise, for example, instructions and data which, when executed, cause a general purpose computer, special purpose computer, or special purpose processing device to perform a certain function or group of functions. As such, some embodiments of the invention may be downloadable to one or more systems or devices, for example, from a website, mesh topology, or other source. As well, the scope of the invention embraces any hardware system or device that comprises an instance of an application that comprises the disclosed executable instructions.

Although the subject matter has been described in language specific to structural features and/or methodological acts, it is to be understood that the subject matter defined in the appended claims is not necessarily limited to the specific features or acts described above. Rather, the specific features and acts disclosed herein are disclosed as example forms of implementing the claims.

As used herein, the term 'module' or 'component' may refer to software objects or routines that execute on the computing system. The different components, modules, engines, and services described herein may be implemented as objects or processes that execute on the computing system, for example, as separate threads. While the system and methods described herein may be implemented in software, implementations in hardware or a combination of software and hardware are also possible and contemplated. In the present disclosure, a 'computing entity' may be any computing system as previously defined herein, or any module or combination of modules running on a computing system.

In at least some instances, a hardware processor is provided that is operable to carry out executable instructions for performing a method or process, such as the methods and processes disclosed herein. The hardware processor may or may not comprise an element of other hardware, such as the computing devices and systems disclosed herein.

In terms of computing environments, embodiments of the invention may be performed in client-server environments, whether network or local environments, or in any other suitable environment. Suitable operating environments for at least some embodiments of the invention include cloud computing environments where one or more of a client, server, or other machine may reside and operate in a cloud environment.

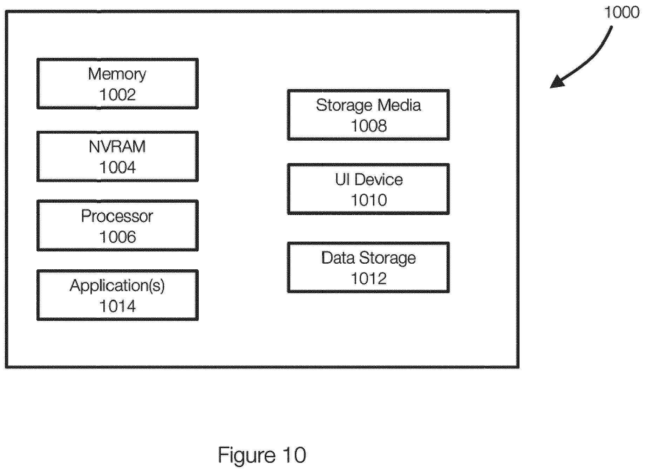

With reference briefly now to Figure 10, any one or more of the entities disclosed, or implied, by the Figures and/or elsewhere herein, may take the form of, or include, or be implemented on, or hosted by, a physical computing device, one example of which is denoted at 1000. As well, where any of the aforementioned elements comprise or consist of a virtual machine (VM), that VM may constitute a virtualization of any combination of the physical components disclosed in Figure 10.

In the example of Figure 10, the physical computing device 1000 includes a memory 1002 which may include one, some, or all, of random access memory (RAM), nonvolatile memory (NVM) 1004 such as NVRAM for example, read-only memory (ROM), and persistent memory, one or more hardware processors 4006, non-transitory storage media 4008, UI device 1010, and data storage 1012. One or more of the memory components 1002 of the physical computing device 1000 may take the form of solid state device (SSD) storage. As well, one or more applications 1014 may be provided that comprise instructions executable by one or more hardware processors 1006 to perform any of the operations, or portions thereof, disclosed herein.

Such executable instructions may take various forms including, for example, instructions executable to perform any method or portion thereof disclosed herein, and/or executable by/at any of a storage site, whether on-premises at an enterprise, or a cloud computing site, client, datacenter, data protection site including a cloud storage site, or backup server, to perform any of the functions disclosed herein. As well, such instructions may be executable to perform any of the other operations and methods, and any portions thereof, disclosed herein.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method, comprising:
identifying missing objects in a cloud tier of a data protection system;
identifying metadata containers, stored in an active tier, that reference the missing objects;
determining fingerprints associated with the missing objects from the identified metadata containers;
reading data containers in the active tier based on the fingerprints of the missing objects;
writing data read from the data containers into a new data container; and
writing the new data container to the cloud tier.

2. The method of claim 1, further comprising performing an index lookup for each of the fingerprints to identify the data containers storing the missing objects.

3. The method of claim 1, wherein the cloud tier and the active tier are part of a namespace.

4. The method of claim 1, wherein an object is an entire data container that includes a plurality of compression regions or a compression region, wherein each compression region includes a plurality of segments.

5. The method of claim 1, further comprising generating a new metadata container to store metadata for the new data container,
preferably further comprising storing the new metadata container in the active tier,
more preferably further comprising rewriting the identified metadata containers to remove the metadata stored in the new metadata container.

6. A non-transitory storage medium having stored therein instructions that are executable by one or more hardware processors to perform operations comprising:
identifying missing objects in a cloud tier of a data protection system;
identifying metadata containers, stored in an active tier, that reference the missing objects;
determining fingerprints associated with the missing objects from the identified metadata containers;
reading data containers in the active tier based on the fingerprints of the missing objects;
writing data read from the data containers into a new data container; and
writing the new data container to the cloud tier.

7. The non-transitory storage medium of claim 6, further comprising performing an index lookup for each of the fingerprints to identify the data containers storing the missing objects.

8. The non-transitory storage medium of claim 6, wherein the cloud tier and the active tier are part of a namespace.

9. The non-transitory storage medium of claim 6, wherein an object is an entire data container that includes a plurality of compression regions or a compression region, wherein each compression region includes a plurality of segments.

10. The non-transitory storage medium of claim 6, further comprising generating a new metadata container to store metadata for the new data container,
preferably further comprising storing the new metadata container in the active tier,
more preferably further comprising rewriting the identified metadata containers to remove the metadata stored in the new metadata container.

11. A method comprising:
determining a list of missing objects in an active tier of a data protection system and fingerprints associated with the missing objects;
performing a cloud tier index lookup to identify a metadata container that references the missing objects;
copy segments corresponding to the missing objects from a cloud tier based on metadata stored in the metadata container; and
writing the segments into a new data container.

12. The method of claim 11, further comprising storing the new data container in the active tier.

13. The method of claim 11, wherein the data protection system is a scaled-out data protection system, further comprising reconstructing active tier data from one or more cloud tiers and one or more active tiers.

14. The method of claim 11, wherein the data protection system is a scaled-out data protection system, further comprising reconstructing cloud tier data from one or more cloud tiers and one or more active tiers.

15. A non-transitory storage medium having stored therein instructions that are executable by one or more hardware processors to perform operations of claim 11.
